# EUROPEAN PATENT SPECIFICATION

(11) **EP 2 941 359 B1**
(45) Date of publication and mention of the grant of the patent: **22.08.2018**
(21) Application number: 14735213.2
(22) Date of filing: 03.01.2014
(51) Int. Cl.: B60H 1/00, G05G 1/10, G05G 7/04

(54) **A CONTROL MECHANISM AND A MOTOR VEHICLE USING THE CONTROL MECHANISM**
STEUERUNGSMECHANISMUS UND KRAFTFAHRZEUG MIT DEM STEUERUNGSMECHANISMUS
MÉCANISME DE COMMANDE ET VÉHICULE À MOTEUR UTILISANT CE MÉCANISME DE COMMANDE

(30) Priority: 05.01.2013 CN 201310001909
(43) Date of publication of application: 11.11.2015
(73) Proprietor: Valeo Automotive Air Conditionning Hubei Co., Ltd., Hubei 434007 (CN)
(72) Inventor: LIU, Yunxin, Jingzhou, Hubei 434007 (CN); ZENG, Xiantao, Jingzhou, Hubei 434007 (CN)
(74) Representative: Metz, Gaëlle
(86) International application number: PCT/CN2014/070087
(87) International publication number: WO 2014/106472

(56) References cited:
- EP-A1- 0 170 155
- EP-A1- 0 997 329
- CN-A- 102 059 931
- DE-A1- 3 744 269
- JP-A- 2010 282 915
- JP-B2- 4 093 752
- JP-B2- 4 108 352

## Description

### FIELD OF THE INVENTION:

The present invention relates to a control mechanism mounted on a control panel of a motor vehicle for the achievement of a controlling function, and the present invention particularly relates to a control mechanism for controlling the air conditioning function of the vehicle. The present invention also relates to a motor vehicle using the control mechanism.

### BACKGROUND:

Control mechanisms mounted on the control panel of the motor vehicle for the achievement of a controlling function are known in this field, which can be used to switch the operation modes of the device controlled, see for example Document EP 0 997329 A1. These kinds of control mechanisms are used to cooperate with a system such as HVAC (system for heating, ventilating and air conditioning), for example to control the HVAC system for switching between multiple operation modes. The control mechanism is joined to HVAC via a cable, and switches the HVAC system among multiple operation modes by controlling the stroke of the cable connected to HVAC. For example, these operation modes include successively a defogging mode, a defogging + foot mode, a foot mode, a face mode and so on. For example, the control mechanism can include a control knob for receiving inputs, with the knob being arranged rotatably and being switchable within an angular range among multiple positions by means of being rotated. These multiple positions correspond to the plurality of operation modes mentioned above respectively, thus the stroke of the cable connecting the control mechanism to the HVAC system can be changed, thereby switching the device connected to the control mechanism via the cable to a corresponding operating state.

In the prior art, the control mechanisms comprise a connecting rod, with one end of the connecting rod being provided thereon with a connecting rod shaft with which the connecting rod can rotate about a longitudinal axis of the connecting rod shaft, and with the other end being connected with a cable which connects the control mechanism to the HVAC system; the connecting rod is also provided with a toothed portion, with the connecting rod being directly connected to the knob transmission gear on the knob shaft of the control knob, so as to transform the rotation of the control knob about the axis of the control knob shaft into the rotation of the connecting rod about the axis of the connecting rod, thereby changing the stroke of the cable, and therefore controlling the switching of the connected HVAC system among various operation states. The knob transmission gear of the above mentioned control knob is arranged about the knob shaft, and the knob transmission gear can rotate synchronously with the control knob.

In such kinds of control mechanisms of the above mentioned prior art, the control knob in the control mechanism always engages directly with the connecting rod, thus having a simple mechanical structure of transmission, however its defect is in that the transmission ratio between the knob and the connecting rod is fixed, i.e., within the whole angular range of the knob's rotation, the pivoting angles of the connecting rod caused by rotating the knob with same angles are the same, so that the changes of the stroke of the cable are also the same as a result.

However, due to economic considerations, the same controlled device (such as HVAC system) is normally expected to be used on as many occasions as possible, while with the controlled device (such as HVAC system) remaining unchanged, it may be desired that the device to be controlled by the control mechanism has more operation modes according to the different specific demands, for example, it may be desired that a foot + face mode is added to the control mechanism in addition to the existing defogging mode, defogging + foot mode, foot mode, and the face mode. Those skilled in the art may understand that the stroke of the cable corresponding to the foot + face mode is of the average value to the stroke of the cable corresponding to the foot mode and the stroke of the cable corresponding to the face mode; while in the control mechanism according to the prior art, i.e., the control mechanism in which the control knob and the connecting rod are directly engaged, for example, by means of the knob transmission gear and the toothed portion of the connecting rod, the foot + face mode position corresponding to the foot + face mode needs to be located at a position where the circumferential angle between the foot mode position and the face mode position is equally divided, that is to say the additionally added position and the previous four positions are not spaced apart circumferentially with equal angles about the knob shaft, which would affect the identification by the user of the operation modes, and affect the appearance of the control mechanism, control panel of the vehicle, and so on. Generally, it is desired that the above mentioned plurality of positions are spaced apart circumferentially from each other with equal angles about the knob shaft, i.e., the rotating angles of the control knob are all equal when switching between the nearby positions, so as to enable the user to better identify different operation modes, and to have better symmetry and aesthetics in the appearance.

Therefore, it is desired in the art to have an improved control mechanism mounted on the control panel of the motor vehicle for the achievement of a control function, which control mechanism enables the control knob to bring, within the whole angular range of the rotation of the control knob, the cable which is under control into stroke change with different transmission ratios, so as to cause the operation mode changes of the device to be controlled. Specifically, in the case that the controlled device under control remains unchanged, although an additional operation mode is added, the configuration of said control mechanism still enables the positions corresponding to the existing operation modes on the panel and the position corresponding to the additional operation mode on the panel to be spaced apart circumferentially from each other with equal angles about the control knob. In other words, when an additional operation mode located between the existing operation modes needs to be added, while it is expected that the position of the additional operation mode corresponding to the added operation mode and the positions of the operation modes corresponding to the existing operation modes can be spaced apart circumferentially from each other with equal angles about the control knob, it is only needed to replace the old control mechanism with the control mechanism according to the present invention, without the need to modify the controlled device under its control, which would be of economical advantage in the cases of applying the control mechanism and the matching device to be controlled thereof (such as the HVAC system) in different occasions.

### SUMMARY:

Based on the above object, the present disclosure provides a control mechanism on the controlling panel of a motor vehicle for the achievement of a control function, which includes a control portion, a transmission portion, and a manipulating portion; in which the control portion of the control mechanism comprises: a panel on which an opening is provided, and a control piece, with said control piece including a control knob, a rotating shaft arranged passing
through said opening, and a knob transmission gear, with said knob transmission gear being arranged concentrically on the knob shaft of said control knob, where said control knob, said knob shaft and said knob transmission gear synchronously rotate about the axis of the knob shaft within a first rotating range and a second rotating range; in which the transmission portion of the control mechanism comprises: a connecting rod, with said connecting rod including a connecting rod shaft and a flange, where said connecting rod shaft is fitted at the back side of said panel so as to enable the connecting rod to rotate about the axis of the connecting rod, and where said flange is of an arc shape whose central axis is the axis of said connecting rod shaft, the flange includes a first side towards the connecting rod shaft and a second side away from the connecting rod shaft, with a first toothed portion being provided on the first side of said flange, and a second toothed portion being provided on the second side of said flange, and an auxiliary transmission gear piece including a transmission gear shaft rotatably arranged at the back side of the panel and a first pinion as well as a second pinion arranged concentrically and rotating synchronously with the auxiliary transmission gear shaft, wherein said first pinion remains engaged with the knob transmission gear; and in which the manipulating portion of the control mechanism comprises: a cable with one end thereof being connected to the end of said connecting rod away from said connecting rod shaft, and with the other end being connected to the controlled device to be controlled by said control mechanism; wherein when the control knob rotates within the first rotating range, said knob transmission gear engages with the first toothed portion of the flange of said connecting rod, so as to drive said connecting rod into rotation with a first transmission ratio; when the control knob rotates within the second rotating range, said knob transmission gear disengages with said first toothed portion, and the second pinion of said auxiliary transmission gear shaft engages with the second toothed portion of the flange of said connecting rod, so that the knob transmission gear drives said connecting rod into rotation with a second transmission ratio via the first pinion and the second pinion of the auxiliary transmission gear shaft; in which said first transmission ratio differs from said second transmission ratio.

While using the control mechanism according to the present disclosure, when controlling the knob to rotate within the first rotating range thereof, the knob transmission gear included therein drives the connecting rod into rotation with the first transmission ratio via the first toothed portion of the flange engaged thereby, so as to conduct the control against the rotating angle of the knob to change accordingly, at a first ratio, the stroke of the cable connected to the end of the connecting rod distant from the connecting rod shaft; when controlling the knob to rotate within the second rotating range thereof, the knob transmission gear included therein disengages from the first toothed portion, and the second pinion of the auxiliary transmission gear piece engages with the second toothed portion of the flange, so as to control the knob to drive the connecting rod into rotation with the second transmission ratio, thereby conducting the control against the pivoting angle of the knob to change accordingly, at a second ratio, the stroke of the cable connected to the end of the connecting rod distant from the connecting rod shaft, wherein the first transmission ratio differs from the second transmission ratio, and accordingly the first ratio differs from the second ratio.

The first transmission ratio and/or the second transmission ratio can be adjusted according to the need of use, for example, by means of adjusting the gear ratio of the knob control gear and the first pinion, and/or the gear ratio of the second pinion and the second toothed portion.

Preferably, said control knob can rotate synchronously with said knob shaft about the longitudinal axis of the knob shaft among a plurality of positions in a synchronous manner, which the plurality of positions include N positions arranged circumferentially about the knob shaft from a position 1 to a position N, wherein the rotating range corresponding to the rotation from the position 1 to the position M is the first rotating range, and the rotating range corresponding to the rotation from the position M to the position N is the second rotating range, where 1<M<N.

The above mentioned N positions are arranged within an angular range about the circumference of the control knob, which angular range can be any angular range between 0-360°, preferably, the angular range can be between 270°. The N positions are preferably arranged at equal angles about the longitudinal axis of the knob shaft of the control knob, and each of the N positions corresponds to one of the plurality of operation modes of the controlled device under control of the control mechanism.

Preferably, the N positions are shown on the panel of the control mechanism, for example, the N positions can be marked by means of the intuitional marks or the text marks as shown in the drawings.

For example, the N positions can be 5 positions, and M can be 3.

For example, the controlled device under control of the control mechanism is the HVAC system.

For example, the 5 positions can be respectively a position for a defogging mode, a position for a defogging + foot mode, a position for a foot mode, a position for a foot + face mode, and a position for a face mode in succession, which are respectively corresponding to a defogging mode, a defogging + foot mode, a foot mode, a foot + face mode, and a face mode of the HVAC system which are under control.

The contents of the present invention illustrated above is only exemplary, those skilled in the art will understand that the mechanism is applicable to other controlled devices in addition to the HVAC system, and the N positions can be spaced apart from each other with equal angles or with unequal angles, i.e., the control mechanism can be altered and improved based on the spirit of the present invention without departing from the present invention. The scope of the present invention is defined by the appended claims.

### BRIEF DESCRIPTION OF THE DRAWINGS:

In a non-limiting manner of demonstration, the configuration of the control mechanism according to the present invention is better shown hereinafter with reference to the following drawings.
Fig. 1A is a front view of the control mechanism according to the embodiment of the present invention;
Fig. 1B is a rear view of the control mechanism according to the embodiment of the present invention;
Fig. 1C is a partial enlarged view of the control mechanism according to the embodiment of the present invention;
Fig. 2 is a partial perspective view of the control mechanism according to the embodiment of the present invention;
Fig. 3A is a partial view of the control mechanism according to the embodiment of the present invention, wherein the control knob is within the first rotating range;
Fig. 3B is a partial view of the control mechanism according to the embodiment of the present invention, wherein the control knob is switching from the first rotating range to the second rotating range;
Fig. 3C is a partial view of the control mechanism according to the embodiment of the present invention, wherein the control knob is within the second rotating range;
Fig. 4 is a diagram of the manipulation of the control mechanism according to the embodiment of the present invention.

### DETAILED DESCRIPTION:

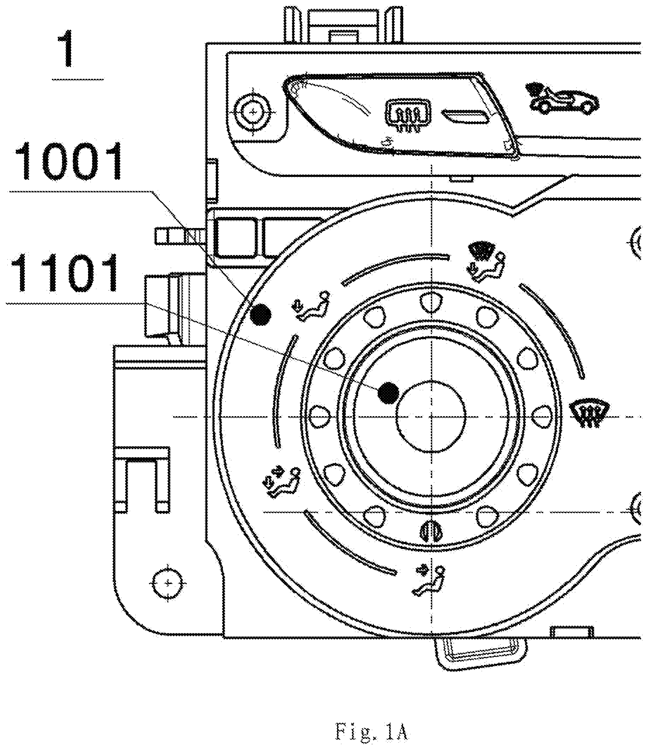

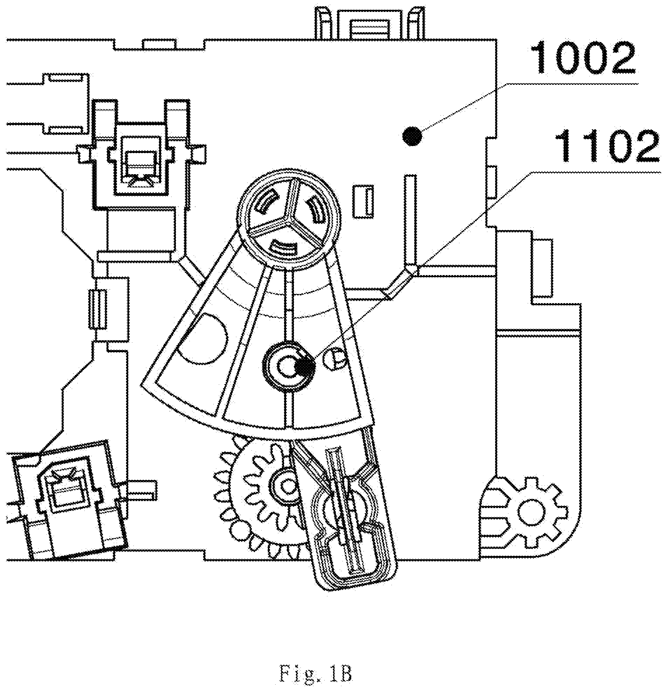

With reference to Fig. 1A-1C, a control mechanism 1 is shown which includes a control portion, a transmission portion and a manipulating portion.

The control portion of the control mechanism 1 comprises a panel and a control piece 110, wherein the panel comprises a front side 1001 exposed to the outside and a back side 1002 opposite to the front side, an opening is arranged to pass through the panel (not shown).

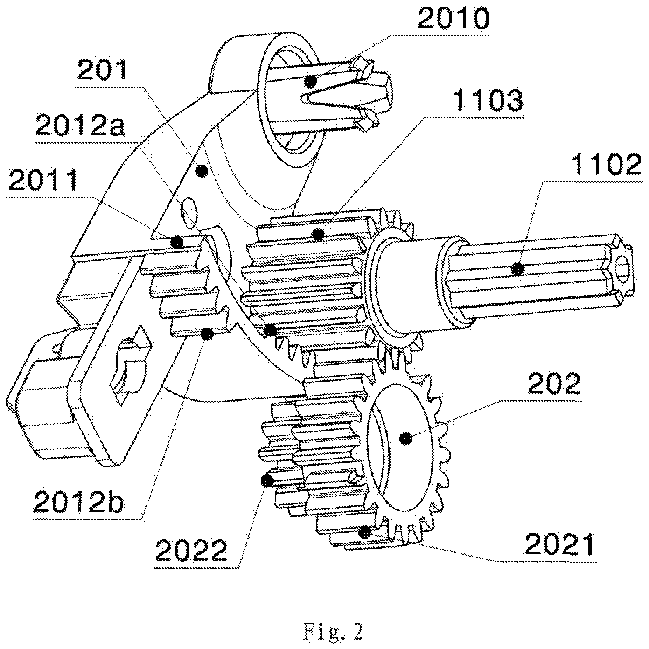

The control piece 110 comprises a control knob 1101, a knob shaft 1102 fixedly connected to the control knob, and a knob transmission gear 1103 arranged on the knob shaft. The knob shaft 1102 is arranged to pass through the opening on the panel, and the control knob 1101 is mounted on the front side 1001 of the panel through the opening. With reference to Fig.2, the knob transmission gear 1103 and the knob shaft 1102 and the control knob 1101 of the control piece 110 are arranged concentrically, the knob transmission gear 1103 and the knob shaft 1102 and the control knob 1101 rotate synchronously about the axis of the knob shaft 1102 within the first rotating range I and the second rotating range II.

The transmission portion of the control mechanism 1 comprises a connecting rod 201; the connecting rod 201 is provided on one end thereof with one connecting rod shaft 2010; the connecting rod shaft 2010 being integral with the connecting rod 201, or being connected thereto in any suitable connection mode; the connecting rod shaft 2010 protrudes from the connecting rod 201, wherein the portion of the connecting rod shaft 2010 protruding from the connecting rod 201 is suitable for being mounted into a mounting hole (not shown) arranged on the back side 1002 of the panel, so that the connecting rod 201 can rotate about the axis of the connecting rod shaft 2010. The connecting rod shaft 2010 can mate with a mounting hole in such a manner of engagement that the shaft can be rotatable about the axis of itself.

The connecting rod 201 also comprises a flange 2011, which flange 2011 is fixedly arranged on the connecting rod 201 and protrudes from the connecting rod 201, and the flange 2011 has an arc shape with the central axis thereof being the axis of the connecting rod shaft 2010; the flange 2011 comprises a first side facing the connecting rod shaft and a second side away from the connecting rod shaft; a first toothed portion 2012a is provided on the first side of said flange 2011, a second toothed portion 2012b is provided on the second side of said flange.

The transmission portion also comprises an auxiliary transmission gear piece 202, which comprises an auxiliary transmission gear shaft supported on the back side of the panel 1002 in a rotatable way; and a first pinion 2021 and a second pinion 2022 which are concentrically arranged and rotate synchronously with the auxiliary transmission gear shaft, wherein said first pinion 2021 remains engaged with the knob transmission gear 1103.

The manipulating portion of the control mechanism 1 comprises a cable (not shown), with one end of the cable connected to the end of the connecting rod 201 away from the connecting rod shaft 2010, and the other end thereof connected to the controlled device under the control of the control mechanism 1. The cable can be connected to the connecting rod 201 in any way known to a person skilled in the art, such as connected thereto by a hole arranged on the connecting rod 201.

By connecting the connecting rod 201 to the cable of the controlled device, the rotation of the connecting rod, the stroke of the cable, and the operation mode of the controlled device are correlated with each other. Generally, the pre-determined stroke of the cable can be related to the operation mode of the controlled device respectively. For example, the controlled device has n operation modes, which are sequentially mode 1, mode 2... mode n, and then n lengths of cables L should be pre-determined, wherein L₁ corresponds to the mode 1, and L₂ corresponds to the mode 2... Ln corresponds to the mode n, and L₁<L₂<...<Ln. Thus, the controlled device can be switched to the particular operation mode n by changing the stroke of cable L to the stroke of cable Ln corresponding to the particular operation mode n.

Rotating the control knob 1101 around the knob shaft 1102 can drive the connecting rod 201 into rotation correspondingly, and because one end of the cable is connected to the end of the connecting rod 201 away from the connecting rod shaft 2010 so that the strokes of the connecting rod 201 and the cable of the controlled device are changed, when the stroke length of the cable has been changed to the above-mentioned predetermined cable length Ln, the operation mode of the controlled device is correspondingly changed to the operation mode n corresponding to the predetermined stroke of cable Ln.

It can be known from the above that it is generally desired that the plurality of knob positions corresponding to the plurality of operation modes are spaced from each other at the same angle circumferentially around the knob shaft 1102, namely, the angles spacing the plurality of positions around the knob shaft 1102 are equal, thereby enabling the user to distinguish the different operation modes better, achieving better symmetry in appearance and improving the appearance of the control panel of the motor vehicle.

For example, in the prior art, when the controlled device has 4 operation modes, the controlled device can be designed to enable the control knob 1101 thereof to rotate among 4 positions spaced circumferentially around the knob shaft 1102 at the same angle, so as to enable the cable length to change among L₁, L₂, L₃ and L₄, wherein L₂-L₁=L₃-L₂=L₄-L₃, because in the control mechanism according to the prior art, the transmission ratio between the transmission portions of the knob transmission gear 21 and the connecting rod 22 is constant, so that the changes in the stroke of cable caused by rotating at same angle are identical.

Based on the various applied environments, for example, when it is mounted into different vehicles, according to the difference in the orientations and specific applications of the vehicles, it may be desired to add a new mode among the existing modes on the basis of the existing operation modes. For example, a control mechanism with more operation modes may be desired to be mounted into the vehicle of a higher market orientation, so as to achieve better control over the HVAC system and better flexibility. For the purpose of taking full advantages of the existing controlled devices, the newly added mode is generally an intermediate mode between 2 existing continuous operation modes, for example, when the existing controlled device has the continuously distributed foot mode and face mode, a foot + face mode may be desired.

It can be understood by a person skilled in the art that it is feasible to add a position of the intermediate operation mode between the 2 continuous positions of operation modes corresponding to the existing 2 continuous operation modes, without other changes. For example, when the new foot + face mode is expected to be added, it can be achieved by adding a sub-position for the foot + face mode, which is located between the existing continuous positions of the foot mode and face mode in such a manner that the two positions are spaced from each other at a same angle by the sub-position, and if the face mode corresponds to the stroke of cable Lₘ, then the foot mode is corresponding to the stroke of cable Lₘ₊₁. Thus, when the control knob 1101 is switched to the sub-position for the foot + face mode, it would drive the connecting rod 201 to rotate and in turn drive the cable to change its stroke to (Lₘ+Lₘ₊₁) / 2, and switches correspondingly the controlled device to the operation mode of foot + face.

However, in this way, in the control mechanism according to the prior art, the positions on the panel will be distributed unevenly, which is undesirable to the manufacture and the user.

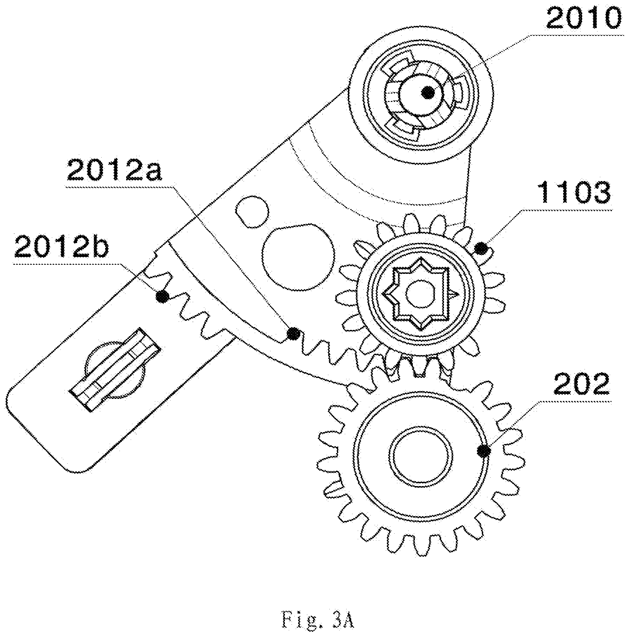

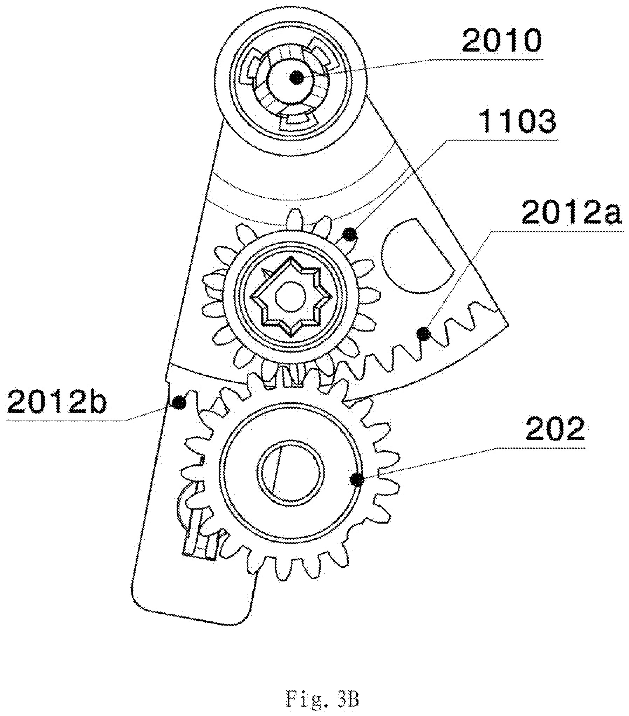

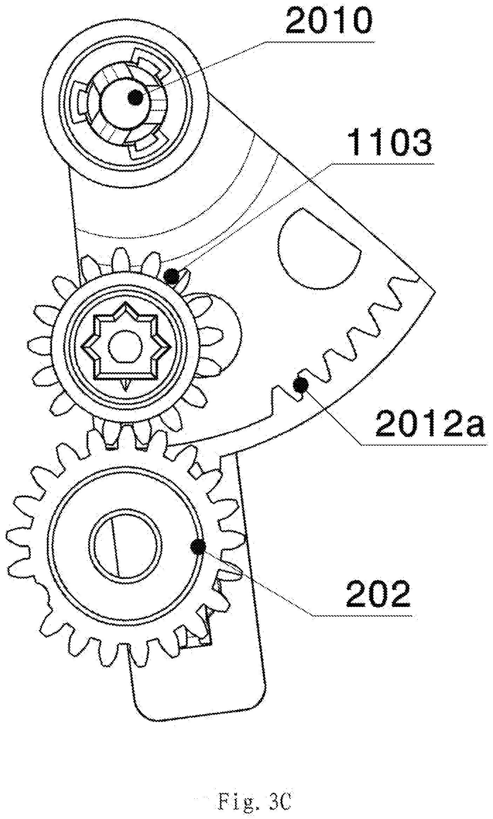

Thus, in the control mechanism according to the embodiments of the present invention, as shown by Fig.2 and Fig. 3A-3C, the transmission portion of the control mechanism 1 also comprises the auxiliary transmission gear piece 202, which comprises the auxiliary transmission gear shaft 2020 arranged on the back of the panel in rotatable way; and the first pinion 2021 and the second pinion 2022 which are arranged concentrically and rotate synchronously with the auxiliary transmission gear shaft. These two pinions can be integral, or connected to each other in any suitable engaging manner. These two pinions can also be formed with the gear shaft integrally, enabling no occurrence of relative rotation between the two pinions but enabling the two pinions to rotate synchronously about the axis of the auxiliary transmission gear shaft. The auxiliary transmission gear shaft and the first pinion 2021 are arranged so that the first pinion 2021 and the knob transmission gear 1103 remain engaged, as shown by Fig. 3A-3C; thus the rotation of the knob transmission gear 1103 can cause the first pinion 2021 to rotate about the auxiliary transmission gear shaft, thereby driving the second pinion 2022 into synchronous rotation.

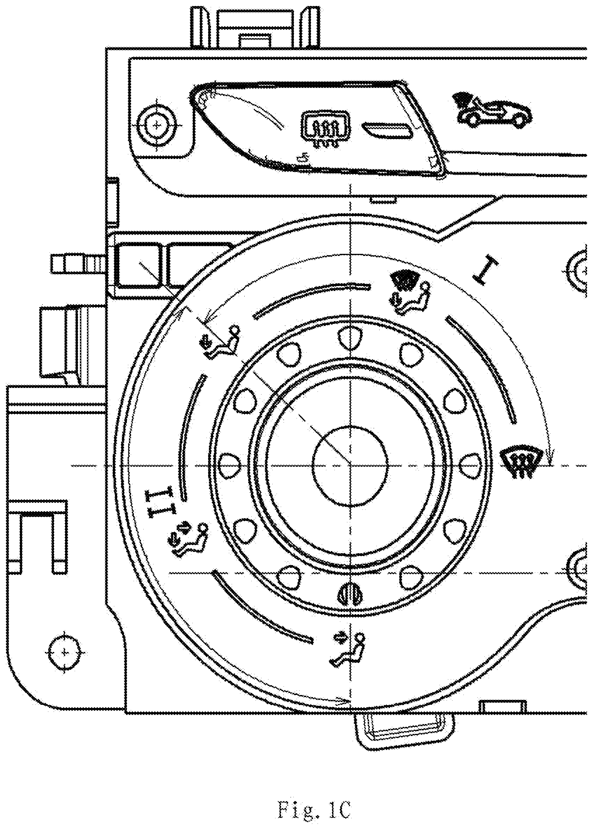

As shown in Fig. 1C, the above-mentioned control knob 1101 can rotate within the first rotating range I and the second rotating range II of the control knob.

When it rotates within the first rotating range I, the knob transmission gear 1103 engages directly with the first toothed portion 2012a of the flange 2011; the rotation of the knob transmission gear 1103 can cause the connecting rod 201 to pivot at a first transmission ratio i₁ between the knob transmission gear 1103 and the first toothed portion 2012a, thereby changing the stroke of cable connected to the end of the connecting rod 201 away from the connecting rod shaft 2010 thereof at a first ratio r₁; the first ratio r₁ is defined as the ratio of the rotation angle Δ_{α} of the control knob 1101 to the change in the stroke of cable Δ_{L}, that is r₁=Δ_{α} / Δ_{L}. When the control knob 1101 rotates within the second rotating range II, the knob transmission gear 1103 of the control knob 1101 disengages from the first toothed portion 2012a, but still remains engaged with the first pinion 2021 and the first pinion 2021 engages with the second toothed portion 2012b synchronously rotating with the first pinion 2021; thus the rotation of the knob transmission gear 1103 causes the connecting rod to rotate at the second transmission ratio i₂ between the knob transmission gear 1103 and the second toothed portion 2012b, thereby changing the stroke of cable connected to the end of the connecting rod 201 away from the connecting rod shaft 2010 thereof at a second ratio r₂; the second ratio r₂ likewise is defined as the ratio of the rotation angle Δ_{α}' of the control knob 1101 to the change in the stroke of cable Δ_{L}', that is r₂=Δ_{α}' / Δ_{L}'. Because the first toothed portion 2012a and the second toothed portion 2012b drive the same connecting rod 22 to pivot, i₁/i₂=r₁/r₂; wherein i₁≠₂, correspondingly r₁≠r₂.

As known to a person skilled in the art, different transmission ratios i₁ and i₂ can be obtained by changing the parameters of the knob transmission gear 1103, the first pinion 2021, the second pinion 2022, the first toothed portion 2012a, and the second toothed portion 2012b in a matched way.

Preferably, 2i₁=i₂, and correspondingly 2r₁=r₂.

In other words, for the same rotation angle Δ_{α} of the control knob, when the rotation is located within the first rotating range, the change in the cable length thereof is Δ_{L}, whereas when the rotation is located within the second rotating range, the change in the cable length thereof is Δ_{L}', in this case Δ_{L}=2Δ_{L}', namely, for the same rotation angle of the control knob, the length variation thereof caused by the rotating within the first rotating range is twice the length variation thereof caused by the rotating within the second rotating range.

This is advantageous in solving the above-mentioned problems, namely, if it is expected to retain a controlled mechanism with a plurality of operation modes which are provided with a plurality of evenly distributed operation mode positions and add a new operation mode which is an intermediate operation mode between two existing continuous operation modes, and at the same time a sub-position located between the two existing continuous associated operation mode positions needs to be introduced and it is desired that the sub-position and the existing plurality of operation mode positions are distributed evenly, then the above-mentioned control mechanism can be introduced, so that the rotation between the two existing continuous associated operation modes corresponds to the second rotating range, thereby evenly distributing the sub-position and the existing plurality of operation mode positions.

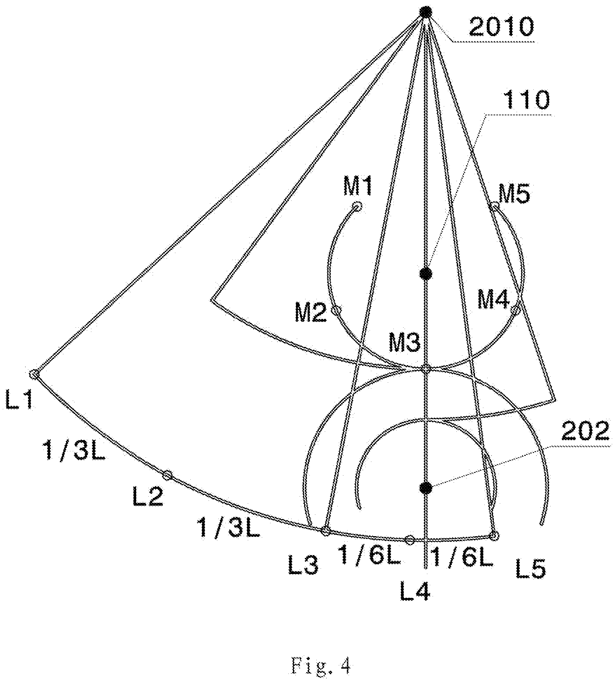

For example, if the device to be controlled (such as the HVAC system) is designed with regard to 4 operation modes, which are the defogging mode M1, the defogging + foot mode M2, the foot mode M3, the face mode M5 in succession, and the cable length corresponding to the modes are 0, 1/3L, 2/3L, L in succession. It is desired that a new operation mode is introduced into the controlled device, such as a foot + face mode M4, which operation mode M4 is in the intermediate position between the foot mode and the face mode; as known to a person skilled in the art, the corresponding stroke of cable for the foot + face mode is an intermediate value between the strokes of cable respectively corresponding to the foot mode and the face mode, preferably being the average value of the two strokes of cable, i.e. 5/6L, as shown in Fig. 4 and Table 1.

**Table 1 Correspondence between the operation modes and the strokes of cable**

| Mode | M1 | M2 | M3 | M4 | M5 |
|---|---|---|---|---|---|
| Sign for the stroke of cable | L1 | L2 | L3 | L4 | L5 |
| Stroke of cable (Δ_{L}) | 0 | 1/3L | 2/3L | 5/6L | L |

In this case, the control mechanism 1 according to the example of the present invention is desired, which has 5 operation mode positions: the position M1 for defogging mode, the position M2 for defogging + foot mode, the position M3 for foot mode, the position M4 for foot + face mode, and the position M5 for face mode in succession, and the 5 operation mode positions are spaced from each other at the same angle along the circumference around the knob shaft 1102. In the control mechanism 1, the rotating range corresponding to the rotation from the position for defogging mode to the position for foot mode belongs to the first rotating range I, and the rotating range corresponding to the rotation from the position 3 for foot mode to the position 5 for face mode belongs to the second rotating range II, and the transmission ratio i₁ in the first rotating range I and the transmission ratio i₂ in the second rotating range II are set to be 2i₁=i₂. It can be known from the above that the variation in the stroke of cable caused by the rotation of the control knob 1101 from one position to another position in the first rotating range I is 1/3L, and the variation in the stroke of cable caused by the rotation of the control knob 1101 from one position to another position in the second rotating range II is 1/6L, as shown in Fig. 4.

The above illustration and examples are conducted on the basis that the number of the modes is 5; and based on the above illustration, a person skilled in the art can foresee that the plurality of positions of the control mechanism 1 according to another embodiment include N positions arranged circumferentially around the knob shaft 1102, wherein the rotating range corresponding to the rotation from the first position to the Mth position is the first rotating range, and the rotating range corresponding to the rotation from the Mth position to the Nth position is the second rotating range, with 1<M<N. In the above-mentioned embodiments, N=5, M=3.

It also can be foreseen by a person skilled in the art that the rotating range of the control knob 1101 can include one or more first rotating ranges I and/or one or more second rotating ranges II, with the one or more first rotating ranges I and/or second rotating ranges II distributed alternately, and each of the one or more first rotating ranges I corresponding to the first toothed portion 2021 on one flange 2011, and each of the one or more second rotating ranges II corresponding to the second toothed portion 2022 on one flange 2011.

The total rotating range of the control knob 1101 is any range between 1° and 360° , for example 270° around the knob shaft 14.

It also can be foreseen by a person skilled in the art that in the control mechanism 1 according to another embodiment of the present invention, the control position of the control knob 1101 may not be spaced from each other at the same angle, but can be spaced at any angle as needed, so as to meet the needs of specific applications; in this case, the control mechanism 1 has adaptive particular transmission ratios within the first rotating range I and the second rotating range II.

Though at least one exemplary embodiment has been illustrated in the above summary and detailed descriptions, it should be understood that there can be a lot of variations. It should be understood that said one or more exemplary embodiments are only examples, and are not intended to restrict the scope, application, or configuration by any means. However, the above summary and detailed descriptions will provide a person skilled in the art with convenient explanation for carrying out at least one exemplary embodiment, and it should be understood that the various changes can be made to the functions and arrangements of the components described in the exemplary embodiment, without departing from the scope defined by the appended claims.

## Claims

1. Control mechanism (1), including:
a control portion, comprising:
a panel on which an opening is provided; and
a control piece (110), with said control piece (110) including a control knob (1101), a knob shaft (1102) arranged passing through said opening, and a knob transmission gear (1103), with said knob transmission gear (1103) being arranged concentrically on the knob shaft (1102) of said control knob (1101), wherein said control knob (1101), said knob shaft (1102) and said knob transmission gear (1103) synchronously rotate about an axis of the knob shaft (1102) within a first rotating range and a second rotating range;
a transmission portion, comprising:
a connecting rod (201), with said connecting rod (201) including a connecting rod shaft (2010) and a flange (2011), in which said connecting rod shaft (2010) is fitted at the back side (1002) of said panel from a protruding portion of said connecting rod (201) so as to enable said connecting rod (201) to rotate about the axis of the connecting rod shaft (2010); wherein said flange (2011) is of an arc shape whose central axis is the axis of said connecting rod shaft (2010), the flange (2011) includes a first side towards the connecting rod shaft (2010) and a second side away from the connecting rod shaft (2010), with a first toothed portion (2012a) being provided on the first side of said flange (2011), and a second toothed portion (2012b) being provided on the second side of said flange (2011);
an auxiliary transmission gear piece (202), including an auxiliary transmission gear shaft rotatably arranged at the back side of the panel, and a first pinion (2021) as well as a second pinion (2022) arranged concentrically and rotating synchronously with the auxiliary transmission gear shaft, wherein said first pinion (2021) remains engaged with the knob transmission gear (1103); and
a manipulating portion, comprising:
a cable, with one end thereof being connected to the end of said connecting rod (201) away from said connecting rod shaft (2010), and with the other end being connected to the controlled device to be controlled by said control mechanism (1),
wherein when the control knob (1101) rotates within the first rotating range, said knob transmission gear (1103) engages with the first toothed portion (2012a) of the flange (2011) of said connecting rod (201), so as to drive said connecting rod (201) into rotation with a first transmission ratio; when the control knob (1101) rotates within the second rotating range, said knob transmission gear (1103) disengages from said first toothed portion (2012a), and the second pinion (2022) of said auxiliary transmission gear shaft engages with the second toothed portion (2012b) of the flange (2011) of said connecting rod (201), so that the knob transmission gear (1103) drives said connecting rod (201) into rotation with a second transmission ratio via the first pinion (2021) and the second pinion (2022) of the auxiliary transmission gear shaft, wherein said first transmission ration differs from said second transmission ratio.

2. Control mechanism (1) according to Claim 1, wherein said control knob (1101) can rotate synchronically with said knob shaft (1102) about the longitudinal axis of the knob shaft (1102) among a plurality of positions in a synchronous manner, which the plurality of positions include N positions arranged circumferentially about the knob shaft (1102) from a position 1 to a position N, wherein the rotating range corresponding to the rotation from the position 1 to a position M is the first rotating range, and the rotating range corresponding to the rotation from the position M to the position N is the second rotating range, where 1<M<N.

3. Control mechanism (1) according to Claim 2, wherein said N positions are spaced apart from each other circumferentially at a same angle.

4. Control mechanism (1) according to Claim 3, wherein N=5 and M=3.

5. Control mechanism (1) according to Claims 2-4, wherein said N positions are marked on the panel of said control mechanism (1).

6. Control mechanism (1) according to Claims 2-4, wherein the range from the position 1 to the position N is corresponding to an angle of 270° about the knob shaft (1102).

7. Control mechanism (1) according to Claim 1, wherein said flange (2011) includes at least one first toothed portion (2012a) and at least one second toothed portion (2012b), wherein the at least one first toothed portion (2012a) and the at least one second toothed portion (2012b) are distributed alternately.

8. Control mechanism (1) according to Claims 1-4 or Claim 7, wherein said controlled device is a HVAC system.

9. Control mechanism (1) according to Claim 8, wherein the position 1 to the position N are respectively a position for a defogging mode, a position for a defogging + foot mode, a position for a foot mode, a position for a foot + face mode, and a position for a face mode in succession.

10. Motor vehicle including the control mechanism (1) according to any one of the above claims.

## Patentansprüche

1. Steuerungsmechanismus (1), umfassend:
einen Steuerungsabschnitt, der Folgendes umfasst:
eine Schalttafel, an der eine Öffnung vorgesehen ist, und
ein Steuerungsteil (110), wobei das Steuerungsteil (110) einen Steuerungsknopf (1101), eine Knopfwelle (1102), die so angeordnet ist, dass sie durch die Öffnung führt, und ein Knopfgetriebe (1103) umfasst, wobei das Knopfgetre4be (1103) konzentrisch um die Knopfwelle (1102) des Steuerungsknopfs (1101) angeordnet ist, wobei sich der Steuerungsknopf (1101), die Knopfwelle (1102) und das Knopfgetriebe (1103) synchron um eine Achse der Knopfwelle (1102) in einem ersten Drehbereich und einem zweiten Drehbereich drehen,
einen Getriebeabschnitt, der Folgendes umfasst:
eine Verbindungsstange (201), wobei die Verbindungsstange (201) eine Verbindungsstangenwelle (2010) und einen Flansch (2011) umfasst, in dem die Verbindungsstangenwelle (2010) auf der Rückseite (1002) der Schalttafel von einem vorstehenden Abschnitt der Verbindungsstange (201) angebracht ist, um zu ermöglichen, dass sich die Verbindungsstange (201) um die Achse der Verbindungsstangenwelle (2010) dreht, wobei der Flansch (2011) eine Bogenform aufweist, deren Mittelachse die Achse der Verbindungsstangenwelle (2010) ist, der Flansch (2011) eine erste zu der Verbindungsstangenwelle (2010) weisende Seite und eine zweite von der Verbindungsstangenwelle (2010) weg weisende Seite umfasst, wobei ein erster gezahnter Abschnitt (2012a) auf der ersten Seite des Flansches (2011) vorgesehen ist und ein zweiter gezahnter Abschnitt (2012b) auf der zweiten Seite des Flansches (2011) vorgesehen ist,
ein Zusatzgetriebeteil (202), das eine Zusatzgetriebewelle, die auf der Rückseite der Schalttafel angeordnet ist, und ein erstes Zahnrad (2021) sowie ein zweites Zahnrad (2022) umfasst, die konzentrisch angeordnet sind und sich synchron mit der Zusatzgetriebewelle drehen, wobei das erste Zahnrad (2021) in Eingriff mit dem Knopfgetriebe (1103) verbleibt, und
einen Betätigungsabschnitt, der Folgendes umfasst:
ein Kabel, wobei ein Ende desselben mit dem Ende der Verbindungsstange (201) weg von der Verbindungsstangenwelle (2010) verbunden ist und das andere Ende mit der gesteuerten Vorrichtung verbunden ist, die von dem Steuerungsmechanismus (1) zu steuern ist,
wobei, wenn sich der Steuerungsknopf (1101) in dem ersten Drehbereich dreht, das Knopfgetriebe (1103) mit dem ersten gezahnten Abschnitt (2012a) des Flansches (2011) der Verbindungsstange (201) eingreift, um die Verbindungsstange (201) mit einer ersten Getriebeübersetzung in Drehung zu versetzen, und wenn sich der Steuerungsknopf (1101) in dem zweiten Drehbereich dreht, das Knopfgetriebe (1103) außer Eingriff mit dem ersten gezahnten Abschnitt (2012a) gebracht wird und das zweite Zahnrad (2022) der Zusatzgetriebewelle mit dem zweiten gezahnten Abschnitt (2012b) des Flansches (2011) der Verbindungsstange (201) eingreift, so dass das Knopfgetriebe (1103) die Verbindungsstange (201) über das erste Zahnrad (2021) und das zweite Zahnrad (2022) der Zusatzgetriebewelle mit einer zweiten Getriebeübersetzung in Drehung versetzt, wobei sich die erste Getriebeübersetzung von der zweiten Getriebeübersetzung unterscheidet.

2. Steuerungsabschnitt (1) nach Anspruch 1, wobei sich der Steuerungsknopf (1101) synchron mit der Knopfwelle (1102) um die Längsachse der Knopfwelle (1102) auf synchrone Weise in einer Vielzahl von Stellungen drehen kann, wobei die Vielzahl von Stellungen N Stellungen umfasst, die in Umfangsrichtung um die Knopfwelle (1102) von einer Stellung 1 bis zu einer Stellung N angeordnet sind, wobei der Drehbereich, der der Drehung von der Stellung 1 zu einer Stellung M entspricht, der erste Drehbereich ist und der Drehbereich, der der Drehung von der Stellung M zu der Stellung N entspricht, der zweite Drehbereich ist, wobei 1<M<N.

3. Steuerungsmechanismus (1) nach Anspruch 2, wobei die N Stellungen in Umfangsrichtung in einem gleichen Winkel voneinander beabstandet sind.

4. Steuerungsmechanismus (1) nach Anspruch 3, wobei N=5 und M=3.

5. Steuerungsmechanismus (1) nach den Ansprüchen 2 bis 4, wobei die N Stellungen auf der Schalttafel des Steuerungsmechanismus (1) markiert sind.

6. Steuerungsmechanismus (1) nach den Ansprüchen 2 bis 4, wobei der Bereich von der Stellung 1 zu der Stellung N einem Winkel von 270° um die Knopfwelle (1102) entspricht.

7. Steuerungsmechanismus (1) nach Anspruch 1, wobei der Flansch (2011) wenigstens einen ersten gezahnten Abschnitt (2012a) und wenigstens einen zweiten gezahnten Abschnitt (2012b) umfasst, wobei der wenigstens eine erste gezahnte Abschnitt (2012a) und der wenigstens eine zweite gezahnte Abschnitt (2012b) wechselweise verteilt sind.

8. Steuerungsmechanismus (1) nach den Ansprüchen 1 bis 4 oder Anspruch 7, wobei es sich bei der gesteuerten Vorrichtung um ein HLK-System handelt.

9. Steuerungsmechanismus (1) nach Anspruch 8, wobei es sich bei der Stellung 1 bis zu der Stellung N jeweils nacheinander um eine Stellung für einen Antibeschlagsmodus, eine Stellung für einen Antibeschlags- und Fußraummodus, eine Stellung für einen Fußraummodus, eine Stellung für einen Fußraum- und Gesichtsbereichsmodus und eine Stellung für einen Gesichtsbereichsmodus handelt.

10. Kraftfahrzeug, das den Steuerungsmechanismus (1) nach einem der vorhergehenden Ansprüche umfasst.

## Revendications

1. Mécanisme de commande (1), comprenant :
une partie de commande, comprenant :
un panneau sur lequel une ouverture est située ; et
une pièce de commande (110), ladite pièce de commande (110) comportant un bouton de commande (1101), un arbre de bouton (1102) conçu pour traverser ladite ouverture, et un engrenage de transmission de bouton (1103), ledit engrenage de transmission de bouton (1103) étant disposé concentriquement sur l'arbre de bouton (1102) dudit bouton de commande (1101), ledit bouton de commande (1101), ledit arbre de bouton (1102) et ledit engrenage de transmission de bouton (1103) tournant de manière synchrone autour d'un axe de l'arbre de bouton (1102) dans une première plage de rotation et une seconde plage de rotation ;
une partie de transmission, comprenant :
une bielle (201), ladite bielle (201) comprenant un arbre de bielle (2010) et un flasque (2011), ledit arbre de bielle (2010) étant monté sur le côté arrière (1002) dudit panneau à partir d'une partie saillante de ladite bielle (201), de manière à permettre à ladite bielle (201) de tourner autour de l'axe de l'arbre de bielle (2010) ; ledit flasque (2011) étant en forme d'arc dont l'axe central est l'axe dudit arbre de bielle (2010), le flasque (2011) comprenant un premier côté vers l'arbre de bielle (2010) et un second côté à l'opposé de l'arbre de bielle (2010), une première partie dentée (2012a) étant située sur le premier côté dudit flasque (2011), et une seconde partie dentée (2012b) étant située sur le second côté dudit flasque (2011) ;
une pièce d'engrenage de transmission auxiliaire (202), comprenant un arbre d'engrenage de transmission auxiliaire disposé rotatif au niveau du côté arrière du panneau, et un premier pignon (2021) ainsi qu'un second pignon (2022) disposés concentriquement et tournant de manière synchrone avec l'arbre d'engrenage de transmission auxiliaire, ledit premier pignon (2021) restant en prise avec la pièce d'engrenage de transmission de bouton (1103) ; et
une partie de manipulation, comprenant :
un câble, dont une extrémité est connectée à l'extrémité de ladite bielle (201) à l'opposé dudit arbre de bielle (2010), et dont l'autre extrémité est connectée au dispositif commandé qui doit être commandé par ledit mécanisme de commande (1),
ledit engrenage de transmission de bouton (1103) entrant en prise avec la première partie dentée (2012a) du flasque (2011) de ladite bielle (201) quand le bouton de commande (1101) tourne dans la première plage de rotation, de manière à entraîner ladite bielle (201) en rotation avec un premier rapport de transmission ; ledit engrenage de transmission de bouton (1103) se libérant de ladite première partie dentée (2012a) et le second pignon (2022) dudit arbre d'engrenage de transmission auxiliaire entrant en prise avec la seconde partie dentée (2012b) du flasque (2011) de ladite bielle (201) quand le bouton de commande (1101) tourne dans la seconde plage de rotation, de sorte que l'engrenage de transmission de bouton (1103) entraîne ladite bielle (201) en rotation avec un second rapport de transmission par l'intermédiaire du premier pignon (2021) et du second pignon (2022) de l'arbre d'engrenage de transmission auxiliaire, ledit premier rapport de transmission étant différent dudit second rapport de transmission.

2. Mécanisme de commande (1) selon la revendication 1, dans lequel ledit bouton de commande (1101) peut tourner de manière synchrone avec ledit arbre de bouton (1102) autour de l'axe longitudinal de l'arbre de bouton (1102) dans une pluralité de positions de manière synchrone, la pluralité de positions comprenant N positions disposées sur la circonférence autour de l'arbre de bouton (1102) d'une position 1 à une position N, la plage de rotation qui correspond à la rotation de la position 1 à une position M étant la première plage de rotation, et la plage de rotation qui correspond à la rotation de la position M à la position N étant la seconde plage de rotation, où 1<M<N.

3. Mécanisme de commande (1) selon la revendication 2, dans lequel lesdites N positions sont espacées les unes des autres d'un même d'angle sur la circonférence.

4. Mécanisme de commande (1) selon la revendication 3, où N=5 et M=3.

5. Mécanisme de commande (1) selon les revendications 2 à 4, dans lequel lesdites N positions sont marquées sur le panneau dudit mécanisme de commande (1).

6. Mécanisme de commande (1) selon les revendications 2 à 4, dans lequel la plage de la position 1 à la position N correspond à un angle de 270° autour de l'arbre de bouton (1102).

7. Mécanisme de commande (1) selon la revendication 1, dans lequel ledit flasque (2011) comprend au moins une première partie dentée (2012a) et au moins une seconde partie dentée (2012b), l'au moins une première partie dentée (2012a) et l'au moins une seconde partie dentée (2012b) étant réparties en alternance.

8. Mécanisme de commande (1) selon les revendications 1 à 4 ou selon la revendication 7, dans lequel ledit dispositif commandé est un système CVC.

9. Mécanisme de commande (1) selon la revendication 8, dans lequel la position 1 à la position N sont respectivement, de manière successive, une position pour un mode de désembuage, une position pour un mode de désembuage + pieds, une position pour un mode pieds, une position pour un mode pieds + visage, et une position pour un mode visage.

10. Véhicule à moteur comprenant le mécanisme de commande (1) selon l'une quelconque des revendications précédentes.
